(19) Europäisches Patentamt
European Patent Office
Office européen des brevets

(11) **EP 2 461 014 B1**

(12) **EUROPEAN PATENT SPECIFICATION**

(45) Date of publication and mention of the grant of the patent:
**22.10.2014 Bulletin 2014/43**

(51) Int Cl.:
*F02M 53/04* (2006.01)   *F02M 61/16* (2006.01)
*F16K 1/38* (2006.01)   *F02M 61/10* (2006.01)
*F02M 63/00* (2006.01)   *F02M 61/18* (2006.01)

(21) Application number: **11164964.6**

(22) Date of filing: **05.05.2011**

(54) **NOZZLE WITH LONG SERVICE LIFE FOR HIGH-PRESSURE MECHANICAL INJECTORS OPERATING WITH HEAVY FUEL**

EINSPRITZDÜSE MIT LANGER LEBENSDAUER FÜR EINEN SCHWERÖL HOCHDRUCK INJEKTOR

BUSE D'INJECTION À LONGUE DURÉE DE VIE POUR UN INJECTEUR HAUTE PRESSION DE CARBURANT LOURD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2010 IT TO20100969**

(43) Date of publication of application:
**06.06.2012 Bulletin 2012/23**

(73) Proprietor: **OMT Officine Meccaniche Torino S.p.A.**
**10090 Cascine Vica - Rivoli TO (IT)**

(72) Inventors:
• **Coppo, Marco**
**I-10126, Torino (IT)**
• **Negri, Claudio**
**I-13100, Vercelli (IT)**

(74) Representative: **Marchitelli, Mauro**
**Via Maria Vittoria 18**
**10123 Torino (IT)**

(56) References cited:
**EP-A1- 1 659 284**    **WO-A1-2007/024418**
**DE-A1-102009 018 767**    **FR-A1- 2 862 718**
**US-A1- 2005 178 860**    **US-A1- 2010 155 507**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the invention

The present invention relates to a nozzle for high-pressure injectors operating with heavy fuel, typically for engines for naval propulsion.

Description of the prior art

The vast majority of engines for naval propulsion are internal-combustion engines operating according to the diesel cycle and supplied with heavy fuel. In the last few years, there have been introduced increasingly restrictive standards that are designed to limit pollutant emissions of the engines for naval propulsion. For said engines the most restrictive constraints imposed by the standards regard the emissions of nitrogen oxides (NOx) and particulate.

Manufacturers of naval engines have implemented various techniques to ensure that the engines respect the new standards. In particular, as regards injectors of a mechanical type, a technique that has been used successfully for limiting the emissions of nitrogen oxides and particulate consists in the increase of the closing pressure of the injector.

The present invention stems from a study conducted on injectors of MaK M43C engines. The manufacturer of these engines, in order to satisfy the new standards that limit pollutant emissions of engines for naval propulsion, has raised the pressure of start of closing of the needle of the injector from 22.7 MPa to 31.2 MPa. This increase in the closing pressure has been obtained by increasing the preloading of the spring of the injector. This has led to an increase of 37% in the preloading of the spring and has meant that the opening pressure of the injector has increased from 40.0 MPa to 57.5 MPa.

This increase of the closing pressure has led to benefits as regards pollutant emissions. However, on the engines in question after this modification there has been noted a reduction of the service life of the nozzle. In fact, given a service life declared by the manufacturer of 7500 hours, already after 1000 hours of operation users note a clear degradation of the performance of the injector.

In particular, it has been noted that the opening pressure drops significantly. Furthermore, the seal between the needle and the body of the nozzle becomes imperfect, giving rise to leakages of fuel towards the combustion chamber. This increases the pollutant emissions and generates in a short time substantial layers of carbon residue on the outer surface of the nozzle and on a part of the dome of the piston.

The present applicant has conducted an accurate numerical and experimental analysis in order to identify the causes of said faults. The study conducted by the present applicant has shown that the increase of the closing pressure of the injector produces an excessively high load due to the impact of the needle on the sealing seat at the end of the closing phase. Said load generates permanent deformations of the profile of the seat on the nozzle body. Over time this leads to a coining of the profile of the needle on the seat of the body of the injector. This phenomenon entails a progressive reduction of the sealing diameter (which explains the reduction of the opening pressure of the injector recorded in the course of experimental tests) and a partial loss of tightness on account of the reduction of the contact pressure. In fact, the coining of the sealing seat leads to an increase in the resting surface given the same axial closing load.

Further analyses conducted by the present applicant have shown that the temperature reached by the nozzles in question in the area of the seat reaches values dangerous for the case-hardening material used for bestowing hardness (and hence resistance to impact) on the sealing seat. In fact, the case-hardened layer that can be obtained with said material is unable to maintain the level of hardness required when its temperature exceeds 220-240°C.

In summary, the study conducted by the present applicant has highlighted that nozzles of MaK M43C engines wear out too fast above all because the impacts between the needle and the seat are excessively violent. This problem is aggravated by the degradation of the mechanical properties of the seat during operation at high temperature.

FR-A-2862718 discloses a fuel injection device for internal combustion engine, having a valve unit with a sealing zone, formed with a specific angle between two wall surfaces and cooperating with a surface forming a valve seat of the casing.

US-A-2010155507 discloses a fuel injection valve including a valve seat having a valve seat portion with a conical space defined therein and tapered toward an injection hole, a needle that has a valve portion formed with a curved surface for abutment with the valve seat portion and a column-shaped sliding portion located upstream of the valve seat portion, wherein assuming that a radius of curvature in an axial direction of the valve portion at a point at which the valve portion and the valve seat portion are in abutment with each other is R and an outer diameter of the sliding portion is D, R is greater than D/2.

Object and summary of the invention

The object of the present invention is to provide a nozzle that will solve the problems of early wear of nozzles according to the prior art maintaining the closing pressure and the flowrate of fuel unvaried.

According to the present invention, said object is achieved by a nozzle having the characteristics forming the subject of Claim 1.

The claims form an integral part of the teaching provided herein in relation to the invention.

Brief description of the drawings

The present invention will now be described in detail with reference to the attached drawings, which are provided purely by way of non-limiting example and in which:

- Figure 1 is an axial section of a nozzle according to the present invention;
- Figure 2 is a detail at a larger scale of the portion of needle present in the area indicated by the arrow II in Figure 1; and
- Figure 3 is a further enlarged view of the part indicated by the arrow II in Figure 1.

Detailed description of the invention

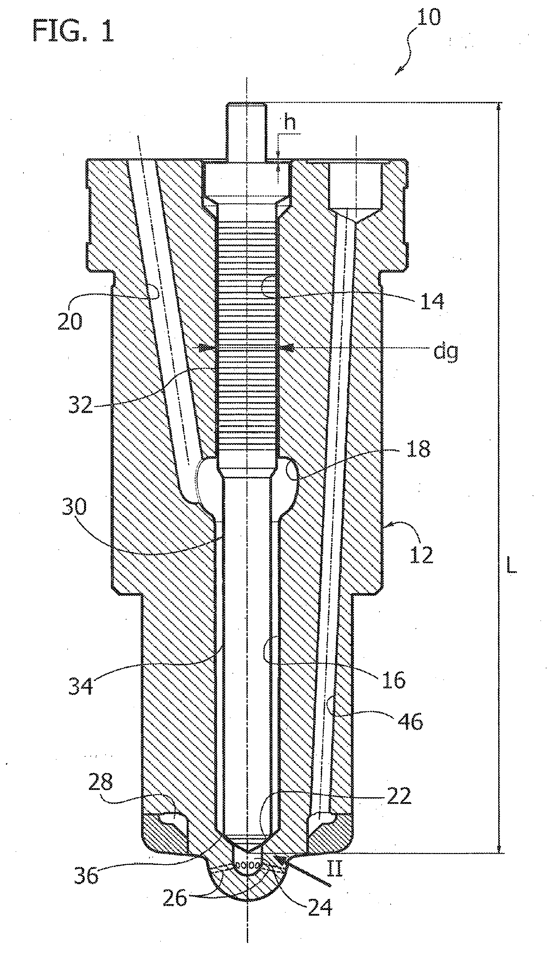

With reference to Figure 1, designated by 10 is a nozzle for high-pressure mechanical injectors according to the present invention. The nozzle 10 is to be installed on diesel engines for naval propulsion supplied with heavy fuel. The nozzle 10 comprises a nozzle body 12 having a longitudinal guide hole 14 and a fuel-supply hole 16 coaxial with the longitudinal guide hole 14. A pressurization chamber 18 is set between the longitudinal guide hole 14 and the fuel-supply hole 16. The pressurization chamber 18 communicates with one or more channels 20 from which the pressurized fuel arrives. Formed at the bottom end of the fuel-supply hole 16 is a conical valve seat 22. Formed underneath the valve seat 22 is a sac volume 24 extending from which is a plurality of injection holes 26. An annular cooling chamber 28 is formed at the bottom end of the nozzle body 12. The cooling chamber 28 communicates with a channel 46 for supply of cooling liquid and with a similar channel, not represented in the figure, for discharge of the liquid.

The nozzle 10 comprises an injection needle 30 having a guide portion 32 and a terminal portion 34. The guide portion 32 slidably engages the guide hole 14 of the body 12 and is provided on its outer surface with a plurality of annular microgrooves. The terminal portion 34 extends with ample radial play in the supply hole 16 and has a bottom end with a sealing seat 36 that co-operates with the valve seat 22 of the body 12.

With reference to Figure 1, the diameter of the guide portion 32 of the injection needle 30 is designated by $d_g$, the overall length of the injection needle is designated by L, and the stroke of opening of the injection needle 30 is designated by h.

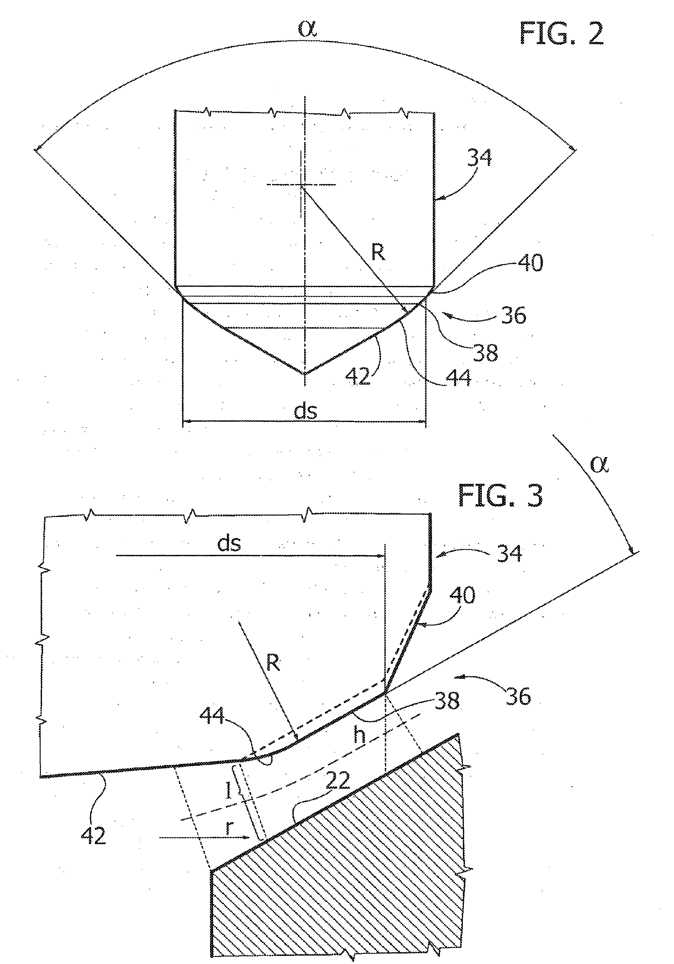

With reference to Figures 2 and 3, the end 36 of the terminal portion 34 of the injection needle 30 has a conical sealing surface 38 having a maximum sealing diameter $d_s$. The conical sealing surface 38 has a sealing angle designated by $\alpha$ in Figure 2. The end 36 of the terminal portion 34 has an external conical surface 40 and an internal conical surface 42. The external conical surface 40 extends between the external cylindrical surface of the terminal portion 34 and the outer edge of the conical sealing surface 38. A toroidal surface 44 is provided between the conical sealing surface 38 and the internal conical surface 42. The toroidal surface 44 has a radius R designated by 44 in Figures 2 and 3.

The nozzle 10 according to the present invention has been designed so as to provide a longer duration and a greater stability of the performance as compared to the nozzle used on MaK M43C engines. As compared to the nozzle used as term of reference, the nozzle 10 according to the present invention has been designed to have the following characteristics:

1. lower needle-seat impact loads;
2. equal closing pressure to maintain the same performance in terms of emissions;
3. reduction of the contact tensile stress on the valve seat;
4. equal permeability, i.e., the same flowrate of fluid that passes through the nozzle in stationary conditions given a pre-set drop in pressure, to maintain the fluid-dynamic performance unaltered;
5. lower temperature of the sealing seat;
6. higher strength of the seat also at high temperatures.

Described in detail hereinafter is the way in which the aforesaid characteristics have been obtained. In what follows reference will be made in all cases to the modifications made with respect to the standard nozzle of MaK M43C engines.

**1. Lower needle-valve seat impact loads**

The force of impact that the needle and the valve seat exchange is equal to the variation of momentum induced in the needle during impact. In particular, for objects that have a section transverse to the direction of motion that is approximately constant, it is possible to derive a simplified relation that enables calculation of the force of impact as a function of the following parameters:

- w: relative speed between the needle and the nozzle at the start of contact;
- $A_S$ and AN: cross sections of the needle and of the nozzle body;
- $C_S$ and $C_N$: speed of sound in the materials of the needle and of the nozzle body;
- $\rho_S$ and $\rho_N$: density of the materials of the needle and of the nozzle body.

The force of impact $F_i$ between the needle and the nozzle body is given by the following relation:

$$F_i = \frac{w}{\dfrac{1}{\rho_S A_S c_S} + \dfrac{1}{\rho_N A_N c_N}}$$

This relation is accurate when the lengths of the two components are large with respect to their transverse dimension, as in the case in question.

From the foregoing relation it emerges clearly that the parameters on which it is possible to operate for reducing the force of impact are the relative speed w and the cross sections $A_S$ and AN of the needle and of the nozzle body.

The speed w with which the needle comes into contact with the valve seat depends upon the acceleration phase due to the action of the spring. To a first approximation, it is possible to assume that the kinetic energy of the needle is basically equal to the work of deformation performed by the spring, i.e., in mathematical terms

$$\begin{cases} E_c = \tfrac{1}{2}\rho_N A_N L \cdot w^2 \\ E_c \cong \int F\,dx \cong p_{cl} A_N \cdot h \end{cases} \quad \text{whence } w \cong \sqrt{2\frac{h}{L}\frac{p_{cl}}{\rho_N}}$$

where:

    *h* is the stroke of lift of the needle;
    *L* is the overall length of the needle; and
    $p_{cl}$ is the pressure of start of closing of the injector.

In order to reduce the absolute load on the valve seat, it has thus been chosen to reduce the guide diameter of the needle with respect to the original value of 11 mm. In the solution according to the present invention, the guide diameter of the needle $d_g$ has a value of between 9.4 and 10.5 mm. With a guide diameter of the needle $d_g$ of 10 mm (also scaling the other diametral dimensions accordingly) and a reduction of the stroke of the needle *h* from 0.9 mm to 0.68 mm there is obtained a reduction of the maximum force of impact $F_i$ of 31%.

### 2. Equal closing pressure

Since the guide diameter of the needle $d_g$ has been reduced, also the surface on which the pressure of the fluid acts with the injector open is reduced. Given the same load of the spring, the closing pressure would be increased. It has, instead, been decided to maintain the level of closing pressure constant. This has enabled reduction of the load of the spring, which in the original design of the manufacturer of the MaK M43C engine was excessively high.

A reduction of 17.8% of the preloading of the spring has thus been obtained, which guarantees a certain margin for possible future increases in the closing pressure.

### 3. Reduction of the contact tensile stress

Previously, it was seen that the redesign of the nozzle has enabled considerable reduction of the needle-seat impact force given the same closing pressure. It is, however, necessary to evaluate what is the increase in service life of the nozzle that can be expected given said reduction.

For the purposes of the present treatment, it is possible to equate the mechanism that leads to the wear of a seat of a nozzle for fuel injectors to the mechanism of contact wear of a cylinder that rolls on a plane, possibly with partial sliding, and with the cylinder and the plane both subject to a load that presses them into contact with one another.

In fact, it is possible to approximate the conical surface of the sealing seat of the nozzle body to a plane, whilst the sealing edge provided on the needle (the portion of which that is radiused with the end always having a small radius) can be equated to a cylindrical surface. It is possible to establish a parallel between a portion of the surface of revolution of a rotating cylinder that is cyclically loaded and unloaded by the contact with the plane and the contact edge of the needle that is cyclically loaded and unloaded during the movement of the needle itself.

In said conditions, it is possible to use the Lundberg-Palmgren law:

$$\log\left(\sigma_{max}^{N}\right) = -0.15 \log(N) + \log\left(\sigma_{max}^{10^6}\right) + 0.9$$

This formula enables estimation of the service life (number of cycles $N$) of the surfaces in contact as a function of the maximum contact pressure. In fact, solving for the number of cycles we obtain

$$N = 10^6 \left(\frac{\sigma_{max}^{10^6}}{\sigma_{max}^{N}}\right)^{6.67}$$

where $\sigma_{max}^{10^6}$ is the contact tensile stress whereby the service life is equal to $10^6$ cycles, whilst $\sigma_{max}^{N}$ is the effective contact tensile stress in the case considered.

The relation that expresses the number of cycles of service life is of an exponential type. This shows how it is possible to obtain considerable increases of duration of the component given modest reductions of the maximum contact tensile stress.

The exact numerical value of the exponent depends upon the type of steel and thermal treatments used, but it is clear that there is in any case a variation of an exponential type between the duration and the maximum contact tensile stress. It is thus important to define how the contact pressure varies in the nozzle in question.

From contact theory it is possible to estimate the maximum stress on the basis of the following relation

$$\sigma_{max} = \frac{4}{\pi}\frac{f}{b} \qquad f = \frac{F_i}{\pi d_g \cdot \sin \alpha/2}$$

where $f$ is the specific linear force (which can be measured in [N/m]), whilst $b$ is the width of the contact edge, which can be in turn estimated as

$$b = 2\sqrt{\frac{4}{\pi}\frac{1+v}{E} f R_{eq}}$$

where $E$ and $v$ are, respectively, the elastic modulus and the Poisson coefficient, whilst $R_{eq}$ is the radius of curvature of the cylindrical surface that presses against a plane surface. In the most generic case, $R_{eq}$ is a term depending upon the mutual curvature of the surfaces in contact. Where, as in the case in question and more in general in the prior art, the radius of the point of contact is smaller than the extent $b$ of the contact, in effect the term $R_{eq}$ depends only upon the angle of interference, i.e., upon the difference of angle between the conical sealing surface on the needle and the conical sealing surface of the valve seat, which in the prior art varies within very narrow ranges (typically 20' - 1°).

By means of the relations appearing above, it is possible to evaluate the dependence of the needle-seat contact pressure ($\sigma_{max}$) during impact as a function of the closing pressure ($p_{cl}$) and of the geometry of the components, i.e., of the guide diameter ($d_g$) and the sealing diameter ($d_s$), of the ratio between needle lift and length ($h/L$) and of the angle of the sealing seat ($\alpha$)

$$\sigma_{max}[MPa] = \sqrt{\frac{1}{\pi}\frac{f}{R_{eq}}\frac{E}{1-v^2}} = \sqrt{\frac{1}{\pi}\frac{E^{3/2}}{1-v^2}} \cdot \frac{(2p_{cl})^{1/4}}{\sqrt{R_{eq}}} \cdot \frac{d_g}{\sqrt{d_s\sin\alpha/2}}\left(h/L\right)^{1/4} = K \cdot \Gamma \cdot G$$

The parameter

$$K = \sqrt{\frac{1}{\pi}\frac{E^{3/2}}{1-v^2}}$$

(which is measured in [$MPa^{0.75}$]) depends exclusively upon the elastic properties of the material used ($E,v$) and can be considered a constant given that steel is the only material used in this type of applications.

The parameter

$$\Gamma = \frac{(2p_{cl})^{1/4}}{\sqrt{R_{eq}}}$$

(which is measured in [$Mpa^{0.25}/mm^{0.5}$]) depends upon applicational choices that it is not desired to alter; namely, it depends upon the desired closing pressure ($p_{cl}$) and the angle of interference in the point of contact (term $R_{eq}$). The first datum is a design parameter since it affects directly pollutant emissions of the engine, whilst the second datum, as has already been said, is linked to very small values of the angle of interference, necessary to keep the contact tensile stresses to a minimum, and hence cannot be further optimized.

The parameter

$$G = \frac{d_g}{\sqrt{d_s\sin\alpha/2}}\left(h/L\right)^{1/4}$$

is defined as parameter of geometrical stress, and its unit of measurement is [$mm^{0.5}$]. This parameter summarizes the combined effect of the geometrical characteristics that can be optimized in order to reduce the maximum contact tensile stress.

The parameter of geometrical stress $G$ enables comparison of the goodness of a design solution as compared to the prior art given the same of closing pressure and angle of interference at the contact. In fact, it is possible to define the relation of proportionality between the contact pressure and the parameter of geometrical stress $G$ as follows

$$\frac{\sigma_{new}}{\sigma_{orig}} = \frac{G_{new}}{G_{orig}}$$

where $\sigma_{new}$ and $\sigma_{orig}$ are the contact tensile stresses of the new solution and of the original solution, respectively, and $G_{new}$ and $G_{orig}$ are the parameters of geometrical stress of the new solution and of the original solution, respectively.

Consequently, by combining the latter relation using the Lundberg-Palmgren law it is possible to estimate the expected increase in service life:

$$\frac{N_{new}}{N_{orig}} = \left(\frac{G_{orig}}{G_{new}}\right)^{6.67}$$

where $N_{new}$ is the expected service life, expressed in number of cycles, of the nozzle characterized by geometrical stress $G_{new}$.

The table below presents some numerical results that compare four different solutions according to the present invention designated by Design OMT 1-4 with the solution according to the priori art. The table below indicates the parameters of geometrical stress of the various solutions and the percentage of increase in service life of the solutions according to the present invention with respect to the expected service life of a solution according to the prior art.

| Variable | Prior Art | Design OMT 1 | Design OMT 2 | Design OMT 3 | Design OMT 4 |
|---|---|---|---|---|---|
| Guide diameter $d_g$ (mm) | 11 | 10 | 10 | 10 | 9.5 |
| sealing diameter $d_s$ (mm) | 7. 9 | 7.2 | 7.2 | 7.2 | 7.2 |
| Seat angle $\alpha$ (°) | 90 | 90 | 90 | 110 | 120 |
| Needle lift $h$ (mm) | 0.9 | 0.76 | 0.68 | 0.61 | 0.59 |
| Needle length $l$ (mm) | 120 | 120 | 120 | 120 | 120 |
| Geometrical strength $G$ (mm$^{0\,5}$) | 1.37 | 1.25 | 1.22 | 1.10 | 1.01 |
| Expected service life (% prior art) | 100% | 184% | 221% | 433% | 776% |

## 4. Equal permeability

In order to reduce the stroke $h$ of the needle maintaining the same permeability it is necessary to modify the geometry of the section of passage between the end of the needle and the valve seat to obtain the same width of the opening of a section of passage given a smaller lift $h$.

In the prior art, the profile of the tip of the needle is obtained with a series of conical stretches, as represented with a dashed line in Figure 3. The solution according to the present invention is represented in Figure 3 with a solid line. The profile of the tip of the needle illustrated in Figure 3 enables a section of outflow to be obtained equal to that of the reference solution but with a smaller stroke of the needle. The solution illustrated in Figure 3 enables the variation of the flowrate through the needle to be contained within 1% with respect to the original solution given a reduction of lift of 24%.

The novelty consists in the introduction of a toroidal surface 44 having a radius of the cross section of the torus that radiuses the conical surface on which the contact with the valve seat 22 and the internal conical surface 42 is provided equal to R.

The section of passage between the needle and the valve seat is defined as follows. A middle line is determined equidistant from the profile of the tip of the needle and that of the valve seat and, for each point along said line, the section of passage can be calculated according to Guldin's theorem: $A = 2\pi r l$, where $r$ is the distance of the point from the axis of revolution and $l$ is the length of the segment perpendicular to the middle line in the point joining the profiles of the needle and of the valve seat.

The shape of the profile according to the present invention enables, given a lift $h$ of 0.68 mm, the same minimum cross section to be obtained as the one that can be obtained according to the prior art with a lift $h$ of 0.9 mm. The radius R of the toroidal surface is comprised between 3 and 8 mm.

The table appearing below presents the comparison between a nozzle according to the present invention and the reference prior art.

| Parameter | Original design | Design OMT2 | Variation |
|---|---|---|---|
| Opening pressure | 57.5 Mpa | 57.5 MPa | 0% |
| Closing pressure ($P_{cl}$) | 31.3 Mpa | 31.1 MPa | -0.5% |
| Needle guide diameter ($d_g$) | 11 mm | 10 mm | -9.1% |
| Sealing diameter ($d_s$) | 7.9 mm | 7.2 mm | -8.9% |
| Needle lift (h) | 0.9 mm | 0.68 mm | -24.4% |
| Estimated maximum speed of impact (w) | 2 m/s | 1.7 m/s | -15.0% |
| Estimated maximum force of impact ($F_1$) | 4220 N | 2911 N | -31.0% |
| Required spring preload | 2646 N | 2175 N | -17.8% |
| Contact pressure upon impact ($\sigma_{max}$) | 100% | 88% | -12.0% |

(continued)

| Parameter | Original design | Design OMT2 | Variation |
|---|---|---|---|
| Mass flowrate in stationary conditions | 1.82 kg/s | 1.81 kg/s | -0.5% |

**5. Lower temperature of the sealing seat**

The temperature of the nozzle body in the area of the sealing seat can be limited by means of an appropriate configuration of the cooling circuit. It is in general constituted by delivery and discharge holes and by an annular chamber 28 set in the vicinity of the surface of the nozzle exposed to the thermal flow due to combustion.

In the original reference design the cooling chamber is too far from the sealing seat and has an excessively wide cross section, which involves an extremely low speed of the fluid and hence an ineffective removal of heat.

This problem has been solved by bringing the cooling chamber considerably closer to the seat and reducing the cross section thereof so as to maintain the speed of the fluid high and shaping the cooling chamber so as to maximize the exchange surface. According to the present invention, the distance in the axial direction between the surface of the cooling chamber that is furthest away and the section with larger diameter of the conical sealing seat 22 is less than 6 mm.

**6. Higher strength of the seat at high temperatures**

In order to increase further the strength of the design a different material has been chosen for the nozzle body 12. The nozzle body 12 according to the present invention is made of a case-hardening steel that has a hardness of the case-hardened layer higher than HV 700 up to operating temperatures of 300°C, whilst the material of the original design maintains this level of hardness only up to 230°C.

Of course, without prejudice to the principle of the invention, the details of construction and the embodiments may vary widely with respect to what is described and illustrated herein, without thereby departing from the scope of the invention as defined in the ensuing claims.

**Claims**

1. A nozzle for high-pressure mechanical injectors for naval diesel engines, comprising:

   - a nozzle body (12) having a longitudinal guide hole (14), a fuel-supply hole (16) coaxial to the longitudinal guide hole (14), a conical valve seat (22) set at one end of said supply hole (16), and a plurality of injection holes (26) communicating with a sac volume (24) that communicates with said supply hole (16) through said valve seat (22); and.
   - an injection needle (30) having a guide portion (32) slidably engaged in said guide hole (14), and a terminal portion (34) that extends with ample radial play in said supply hole (16), said terminal portion (34) having an end (36) with a sealing seat (38) that co-operates with said valve seat (22), said end (36) of the terminal portion (34) of the injection needle (30) has a toroidal surface (44) with a radius R set between said sealing seat (38) and an internal conical surface (42), wherein said guide portion (32) has a guide diameter $d_g$, said sealing seat (38) has a sealing diameter $d_s$ and a sealing angle $\alpha$, and wherein the injection needle (30) has an overall length $L$ and a lift stroke $h$,
   said nozzle being **characterized in that**:
   - the guide diameter $d_g$ is comprised between 9.4 and 10.5 mm,
   - said sealing needle (30) has a parameter of geometrical stress G defined by the formula

$$G = \frac{d_g}{\sqrt{d_s \sin \frac{\alpha}{2}}} \left( \frac{h}{L} \right)^{1/4}$$

   having a value comprised between 1.00 mm$^{0.5}$ and 1.25 mm$^{0.5}$, and and
   - said radius R comprised between 3 mm and 8 mm.

2. The nozzle according to Claim 1, **characterized in that** said nozzle body (12) has a cooling chamber (28), in which the distance in an axial direction between the surface of the cooling chamber (28) that is furthest away and the section with largest diameter of the conical valve seat (22) is less than 6 mm.

3. The nozzle according to Claim 1, **characterized in that** the nozzle body (12) is made of steel having a hardness higher than HV 700 on the surface of the sealing seat (38) also at temperatures higher than 280°C.

**Patentansprüche**

1. Einspritzdüse für einen Hochdruckinjektor für Schiffsdieselmotoren, umfassend:

   - einen Düsenkörper (12) mit einem Längsführungsloch (14), einem Kraftstoffzufuhrloch (16), das zu dem Längsführungsloch (14) koaxial ist, einem konischen Ventilsitz (22), der an einem Ende des Zufuhrlochs (16) eingesetzt ist, und einer Vielzahl von Einspritzlöchern (26), die mit einem Sackvolumen (24) in Verbindung stehen, das durch den Ventilsitz (22) hindurch mit dem Zufuhrloch (16) in Verbindung steht; und
   - eine Einspritznadel (30), die einen Führungsteil (32), der gleitend mit dem Führungsloch (14) in Eingriff steht, und einen Endteil (34), der sich mit reichlich radialem Spielraum in das Zufuhrloch (16) erstreckt, aufweist, wobei der Endteil (34) ein Ende (36) mit einem Dichtungssitz (38) aufweist, der mit dem Ventilsitz (22) zusammenwirkt, wobei das Ende (36) des Endteils (34) der Einspritznadel (30) eine ringförmige Oberfläche (44) mit einem Radius R aufweist, die zwischen dem Dichtungssitz (38) und einer internen konischen Oberfläche (42) eingesetzt ist,
   wobei der Führungsteil (32) einen Führungsdurchmesser dg aufweist, der Dichtungssitz (38) einen Dichtungsdurchmesser $d_s$ und einen Dichtungswinkel $\alpha$ aufweist, und wobei die Einspritznadel (30) eine Gesamtlänge L und eine Hublänge h aufweist,
   wobei die Düse **dadurch gekennzeichnet ist, dass**:
   - der Führungsdurchmesser dg zwischen 9,4 und 10,5 mm liegt,
   - die Dichtungsnadel (39) einen Parameter der geometrischen Belastung G aufweist, die durch folgende Formel definiert wird

$$G = \frac{d_g}{\sqrt{d_s \sin \frac{\alpha}{2}}} \left(\frac{h}{L}\right)^{1/4},$$

   die einen Wert zwischen 1,00 mm$^{0,5}$ und 1,25 mm$^{0.5}$ aufweist, und wobei der Radius R zwischen 3 mm und 8 mm liegt.

2. Düse nach Anspruch 1, **dadurch gekennzeichnet, dass** der Düsenkörper (12) eine Kühlkammer (28) aufweist, in welcher der Abstand in der axialen Richtung zwischen der Oberfläche der Kühlkammer (28), die am weitesten entfernt ist, und dem Abschnitt mit dem größten Durchmesser des konischen Ventilsitzes (22) kleiner als 6 mm ist.

3. Düse nach Anspruch 1, **dadurch gekennzeichnet, dass** der Düsenkörper (12) aus Stahl besteht, der eine Härte von mehr als HV 700 an der Oberfläche des Dichtungssitzes (38) auch bei Temperaturen von mehr als 280 °C aufweist.

**Revendications**

1. Buse pour des injecteurs mécaniques haute pression pour des moteurs diesel marins, comprenant :

   - un corps de buse (12) ayant un trou de guidage longitudinal (14), un trou d'alimentation en carburant (16) coaxial au trou de guidage longitudinal (14), un siège de soupape conique (22) défini à une extrémité dudit trou d'alimentation (16), et une pluralité de trous d'injection (26) communiquant avec un volume de sac (24) qui communique avec ledit trou d'alimentation (16) à travers ledit siège de soupape (22) ; et
   - une aiguille d'injection (30) ayant une partie de guidage (32) engagée en coulissement dans ledit trou de guidage (14), et une partie terminale (34) qui s'étend avec un grand jeu radial dans ledit trou d'alimentation (16), ladite partie terminale (34) ayant une extrémité (36) avec un siège d'étanchéité (38) qui coopère avec ledit siège de soupape (22), ladite extrémité (36) de la partie terminale (34) de l'aiguille d'injection (30) a une surface toroïdale (44) avec un rayon R définie entre ledit siège d'étanchéité (38) et une surface conique interne (42), dans lequel ladite partie de guidage (32) présente un diamètre de guidage dg, ledit siège d'étanchéité (38) présente un diamètre d'étanchéité $d_s$ et un angle d'étanchéité $\alpha$, et dans lequel l'aiguille d'injection (30) présente une longueur totale L et une course de levage h,

ladite buse étant **caractérisée en ce que** :

- le diamètre de guidage dg est compris entre 9,4 et 10,5 mm,

- ladite aiguille d'étanchéité (30) présente un paramètre de contrainte géométrique G défini par la formule

$$G = \frac{d_g}{\sqrt{d_s \sin \frac{\alpha}{2}}} \left(\frac{h}{L}\right)^{1/4}$$

ayant une valeur comprise entre 1,00 mm$^{0,5}$ et 1,25 mm$^{0,5}$, et ledit rayon R compris entre 3 mm et 8mm.

2. Buse selon la revendication 1, **caractérisée en ce que** ledit corps de buse (12) a une chambre de refroidissement (28), dans laquelle la distance dans une direction axiale entre la surface de la chambre de refroidissement (28) qui est la plus éloignée et la section ayant le plus grand diamètre du siège de soupape conique (22) est inférieure à 6 mm.

3. Buse selon la revendication 1, **caractérisée en ce que** le corps de buse (12) est réalisé en acier ayant une dureté supérieure à 700 HV sur la surface du siège d'étanchéité (38) également à des températures supérieures à 280°C.

FIG. 1

α FIG. 2

34

R

40

36

38

42          44

ds

FIG. 3

α

ds

34

40

R

44

38          36

h

l          22

42

r

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2862718 A
- US 2010155507 A